# FASCICULE DE BREVET EUROPEEN

(11) **EP 0 618 996 B1**
(45) Date de publication et mention de la délivrance du brevet: **08.05.1996**
(21) Numéro de dépôt: 93924644.3
(22) Date de dépôt: 27.10.1993
(51) Int. Cl.: F01D 5/34

(54) **PROCEDE DE FABRICATION D'UNE ROUE DE TURBINE A AUBES INSEREES ET ROUE OBTENUE PAR LE PROCEDE**
VERFAHREN ZUR HERSTELLUNG EINES TURBINENRADS MIT AXIALEINGEFUGTEN SCHAUFELN UND TURBINENRAD NACH DIESEM VERFAHREN
PROCESS FOR THE MANUFACTURE OF A WHEEL FOR A TURBINE WITH INSERTED BLADES AND WHEEL SO OBTAINED

(30) Priorité: 27.10.1992 FR 9212791
(43) Date de publication de la demande: 12.10.1994
(73) Titulaire: SOCIETE EUROPEENNE DE PROPULSION, F-92150 Suresnes (FR)
(72) Inventeur: VANDENDRIESSCHE, Georges, F-27200 Vernon (FR)
(74) Mandataire: Thévenet, Jean-Bruno
(86) Numéro de dépôt international: FR9301048
(87) Numéro de publication internationale: WO9410426

(56) Documents cités:
- EP-A- 0 073 651
- FR-A- 1 602 316
- GB-A- 2 161 109
- US-A- 2 771 267

## Description

### Domaine de l'invention

La présente invention concerne un procédé de fabrication de roue de turbine hybride à aubes en matériau composite ou céramique fixées sur un moyeu métallique, ainsi qu'une roue de turbine à aubes insérées obtenue selon ce procédé et trouvant des applications aussi bien dans le domaine industriel que dans le domaine de l'aéronautique et de l'espace.

### Art antérieur

On connaît déjà, notamment par les documents EP-A-0 176 386, FR-A-2 637 319 et FR-A-2 476 766, des roues de turbine monoblocs dont le moyeu et les aubes sont entièrement réalisés en matériaux composites. Ces roues de turbine présentent l'avantage de la légèreté, mais leur réalisation est délicate car il faut adapter les caractéristiques de résistance uni-directionnelle des fibres composites au champ de contraintes multidirectionnel existant dans un ensemble constitué d'un disque et d'aubes, et il existe des problèmes d'équilibrage.

Dans ce type de roue de turbine, il faut également tenir compte des caractéristiques de cisaillement et de déformation de la matrice ainsi que celles des fibres, et il existe des risques de découpe des aubes au niveau de la jante.

On connaît également, notamment par les documents FR-A-2 608 674, EP-A-0367958 et US-A-4 326 835, des turbines mixtes à aubes en matériau composite ou céramique comprenant un pied destiné à permettre une insertion dans un moyeu métallique.

Dans ce type de turbine, les aubes sont fabriquées sous la forme de composants discrets puis sont encastrées et bloquées à la périphérie d'un disque métallique au moyen d'assemblages par exemple à queue d'aronde.

Du fait que les aubes ne présentent pas une géométrie simple, puisque le pied est en forme de queue d'aronde ou de pied de sapin, l'usinage du matériau composite présente certaines difficultés et l'assemblage avec le moyeu est assez délicat à réaliser.

On connaît encore des rotors de turbine entièrement métalliques qui présentent une masse non négligeable, et, du fait de leur mode d'assemblage, impliquent des vitesses de rotation limitées.

### Objet et description succincte de l'invention

La présente invention vise à remédier aux inconvénients précités des roues de turbines connues et notamment à permettre une fabrication simplifiée de roues de turbine présentant une résistance mécanique améliorée et étant capables de supporter de grandes vitesses de rotation dans des conditions d'environnement difficile.

Ces buts sont atteints grâce à un procédé de fabrication d'une roue de turbine à aubes en matériau composite ou céramique insérées dans un moyeu métallique, caractérisé en ce qu'il comprend les étapes suivantes :
a) on fabrique des aubes en matériau composite ou céramique présentant chacune une forme essentiellement cylindrique droite avec une section définissant un profil prédéterminé non circulaire et on forme un trou essentiellement perpendiculaire à l'axe de l'aube dans le pied de celle-ci,
b) on forme un anneau cylindrique fermé de hauteur prédéterminée correspondant à la largeur du moyeu de la roue et comportant des orifices correspondant audit profil prédéterminé des aubes,
c) on insère les pieds des aubes dans lesdits orifices de l'anneau cylindrique, formant jante,
d) on enfile successivement les pieds des différentes aubes insérées dans l'anneau cylindrique dans un fil métallique rigide annulaire ouvert dont le diamètre est inférieur à celui de l'anneau cylindrique et qui traverse lesdits trous formés dans les pieds des aubes,
e) on dispose l'assemblage constitué des aubes, de l'anneau cylindrique et du fil métallique rigide annulaire dans un boîtier étanche après avoir interposé des entretoises ou inserts amovibles entre les têtes des aubes émergeant radialement vers l'extérieur au-delà dudit anneau cylindrique,
f) on réalise une compaction isostatique à chaud pour compacter une poudre d'alliage métallique introduite dans le boîtier étanche pour réaliser le moyeu de la roue de turbine en noyant les pieds d'aube et le fil métallique rigide annulaire selon la technique de la métallurgie des poudres, et
g) on usine la partie extérieure du boîtier étanche délimitant le moyeu de la roue de turbine et on retire lesdites entretoises amovibles.

Par la liaison des aubes retenues par le fil métallique rigide traversant leur pied, il est possible d'assurer un maintien efficace des aubes à la fois lors du montage et lors de l'assemblage définitif dans lequel les pieds d'aubes et le fil métallique rigide sont noyés dans le moyeu en alliage métallique réalisé par compaction isostatique à chaud.

Le procédé selon l'invention permet une fabrication "au kilomètre" des aubes. Ainsi, selon une caractéristique particulière de la présente invention, on fabrique en une seule opération une grande longueur de matériau composite ou céramique cylindrique présentant une section de profil uniforme prédéterminé, puis on tronçonne en aubes individuelles ladite grande longueur de matériau composite ou céramique.

Le processus de fabrication des aubes par une technique de saucissonnage simplifie grandement la fabrication par comparaison avec des aubes en matériau composite présentant une forme complexe avec un pied en forme de queue d'aronde ou de sapin.

Le procédé selon l'invention apporte une augmentation de la résistance mécanique de la roue dans le cadre d'un produit mixte qui, par les aubes en matériau composite, offre une bonne tenue au fluage, à l'oxydation et aux vibrations, dans une ambiance haute température, et par le moyeu métallique, offre une bonne résistance à la fatigue dans une ambiance à moyenne température.

Le procédé selon l'invention confère une bonne adhérence des aubes en composite au métal compacté. Il permet une tenue à grande vitesse de rotation, de l'ordre de 1000 tours par seconde, et à haute température.

L'anneau cylindrique fermé formant jante est avantageusement métallique, mais peut également être en un matériau composite ou céramique.

Les orifices correspondant au profil prédéterminé des aubes peuvent être formés par découpe dans un anneau cylindrique déjà préformé.

Toutefois, pour former un anneau cylindrique fermé métallique, on peut d'abord découper dans un ruban métallique plat de largeur prédéterminée correspondant à la largeur du moyeu de la roue, des orifices correspondant audit profil prédéterminé des aubes et on conforme ensuite le ruban métallique muni des orifices en un anneau cylindrique fermé.

Selon un mode particulier de réalisation, après réalisation de l'assemblage constitué des aubes, de l'anneau métallique ou composite cylindrique et du fil métallique rigide annulaire, on réalise une opération de brasage entre les pieds d'aube et l'anneau métallique ou composite cylindrique, et on raccorde le boîtier étanche sur l'anneau métallique ou composite cylindrique, seuls les pieds d'aube et le fil métallique rigide étant disposés à l'intérieur du boîtier étanche dans lequel est effectuée l'opération de compaction isostatique à chaud.

Dans ce cas, les pieds d'aube et le cas échéant l'anneau cylindrique, si celui-ci est en composite, sont avantageusement recouverts d'une couche d'un matériau d'imperméabilisation et/ou d'une barrière de diffusion avant l'opération de brasage.

Selon un autre mode particulier de réalisation, on réalise la compaction isostatique à chaud dans un boîtier étanche qui entoure l'ensemble de l'assemblage constitué des aubes de l'anneau cylindrique, du fil métallique rigide et des entretoises ou inserts.

Cette solution est particulièrement simple car elle n'implique pas de brasage autour des aubes et ne pose pas de problème d'étanchéité. Il convient simplement de maintenir la présence d'inserts, métalliques ou céramiques, formant des entretoises entre les aubes, à l'extérieur de l'anneau cylindrique, pour éviter l'écrasement des aubes, la pression étant encaissée par ces inserts.

La compaction isostatique à chaud est avantageusement réalisée à une température de l'ordre de 1000°C et sous une pression de l'ordre de 1000 bar. Ces conditions dépendent du matériau utilisé pour fabriquer le moyeu.

Quel que soit le mode de réalisation envisagé, la poudre d'alliage métallique servant à la réalisation de la compaction isostatique à chaud peut avantageusement être de même nature que le matériau formant le fil métallique rigide, ce qui assure une grande homogénéité du moyeu. Le choix de matériaux différents est toutefois également possible selon les applications envisagées.

Pour permettre l'enfilage des pieds d'aubes dans le fil métallique rigide annulaire, l'ouverture de celui-ci est légèrement supérieure à l'épaisseur d'une aube, c'est-à-dire à la profondeur d'un trou formé dans un pied d'aube.

En position finale, l'une des extrémités du fil métallique rigide annulaire peut être située sensiblement à mi-profondeur du trou formé dans un pied d'aube. Selon une variante de réalisation, en position finale, les deux extrémités du fil métallique rigide annulaire sont situées entre deux aubes et comportent une liaison par agrafe.

Avantageusement, on dépose sur chaque tête d'aube sur la partie émergente par rapport à l'anneau métallique cylindrique, une couche spécifique de protection contre l'oxydation et les attaques des milieux agressifs.

L'invention concerne également une roue de turbine monobloc de composition hétérogène à aubes en matériau composite ou céramique insérées dans un moyeu métallique, appliquée notamment dans le domaine de l'aéronautique ou de l'espace, caractérisée en ce que les aubes présentent chacune une forme essentiellement cylindrique droite avec une section définissant un profil prédéterminé non circulaire et comportent chacune un pied d'aube noyé dans le moyeu métallique et muni d'un trou essentiellement perpendiculaire à l'axe de l'aube, les trous des différents pieds d'aube étant tous traversés par un élément métallique noyé dans le moyeu.

### Brève description des dessins

D'autres caractéristiques et avantages de l'invention ressortiront de la description suivante de modes particuliers de réalisation donnés à titre d'exemples non limitatifs, en référence aux dessins annexés, sur lesquels :
- la figure 1 est une vue en perspective d'une partie d'un exemple de roue de turbine réalisée conformément à l'invention,
- la figure 2 est une vue en perspective d'un exemple d'aube en matériau composite pouvant être incorporée dans une roue de turbine selon l'invention,
- la figure 3 est une vue d'une portion de ruban plat métallique muni d'ouvertures pour le passage d'aubes,
- la figure 4 montre en perspective un ruban plat métallique muni d'ouvertures après sa conformation en anneau fermé, cylindrique
- la figure 5 est une vue en coupe axiale montrant le montage d'une aube dans une ouverture de l'anneau de la figure 4 et l'engagement d'un fil rigide de retenue du pied d'aube,
- la figure 6 est une vue en plan montrant le processus d'engagement des aubes dans l'anneau de la figure 4 et d'enfilage des pieds d'aubes dans un fil rigide annulaire ouvert,
- Les figures 7A et 7B montrent un exemple possible pour les deux dernières étapes d'enfilage de pieds d'aubes dans un fil rigide annulaire ouvert,
- la figure 8 est une vue en perspective d'un assemblage selon l'invention comprenant des aubes en matériau composite insérées dans un anneau cylindrique et présentant des pieds enfilés dans un fil métallique de retenue,
- la figure 9 est une vue en coupe radiale de l'assemblage de la figure 8 placé dans un boîtier pour une opération de compaction isostatique à chaud,
- la figure 10 est une vue de détail en coupe radiale montrant le brasage d'une aube sur un anneau cylindrique,
- la figure 11 est une vue en perspective de détail avec demi-coupe axiale montrant une aube enfermée dans un boîtier pour une opération de réalisation du moyeu par compaction isostatique à chaud,
- la figure 11A est une vue de détail montrant un exemple de raccordement de deux parties du boîtier de la figure 11,
- les figures 12 et 13 sont des vues en perspective montrant deux faces opposées d'une roue de turbine selon l'invention munie d'un boîtier métallique pour la réalisation du moyeu par compaction isostatique à chaud en laissant émerger des parties d'extrémité des aubes, et
- les figures 14 et 15 montrent en coupe axiale deux parties d'un boîtier destiné à contenir un assemblage selon l'invention tel que l'assemblage de la figure 8 pour réaliser un moyeu par compaction isostatique à chaud avec enfermement de l'intégralité des aubes à l'intérieur du boîtier.

### Description détaillée de modes particuliers de réalisation de l'invention

Le procédé selon l'invention permet de réaliser facilement une roue de turbine monobloc de composition hétérogène comprenant essentiellement des aubes 16 en matériau composite à matrice composite insérées dans un moyeu métallique 40 réalisé par la métallurgie des poudres.

Les aubes en matériau composite peuvent être réalisées par exemple en carbone-carbone ou en carbone-carbure de silicium.

Les têtes d'aube 17 constituées par les parties des aubes qui émergent du moyeu 40 peuvent être revêtues d'une couche spécifique de protection contre l'oxydation et les attaques des milieux agressifs (tels que par exemple l'hydrogène ou des ergols). La couche de protection peut elle-même jouer un rôle d'imperméabilisation du matériau composite.

Les pieds d'aube 18 noyés dans le moyeu 40 peuvent également être préalablement revêtus d'une couche d'un matériau d'imperméabilisation ou d'une barrière de diffusion.

Le moyeu 40 peut être réalisé à partir d'un alliage par exemple à base de nickel, de titane ou de fer. Toutefois, le procédé de fabrication s'adapte facilement à des alliages de natures très diverses.

Les couches de protection, de barrière de diffusion ou d'imperméabilisation des aubes 16, qui peuvent présenter des épaisseurs allant de quelques centièmes de millimètre à quelques millimètres, peuvent être réalisées par différentes techniques telles que par exemple le dépôt par plasma, le dépôt électrolytique, le dépôt en phase gazeuse par procédé chimique ou physique (procédés CVD et PVD), le dépôt par peinture.

La ou les couches d'imperméabilisation ou de barrière de diffusion déposées sur les pieds d'aube 18 peuvent également contribuer à améliorer l'interface entre le matériau métallique du moyeu et le matériau composite de la pale, et peuvent notamment présenter des compositions chimiques intermédiaires tenant compte des différences de comportement en dilatation des deux matériaux constitutifs des aubes 16 et du moyeu 40. A titre d'exemple, une couche d'imperméabilisation ou de barrière de diffusion peut comprendre un alliage à base de cuivre et de nickel.

Selon une caractéristique importante de la présente invention, les aubes 16 présentent une forme essentiellement cylindrique droite avec une section définissant un profil prédéterminé non circulaire.

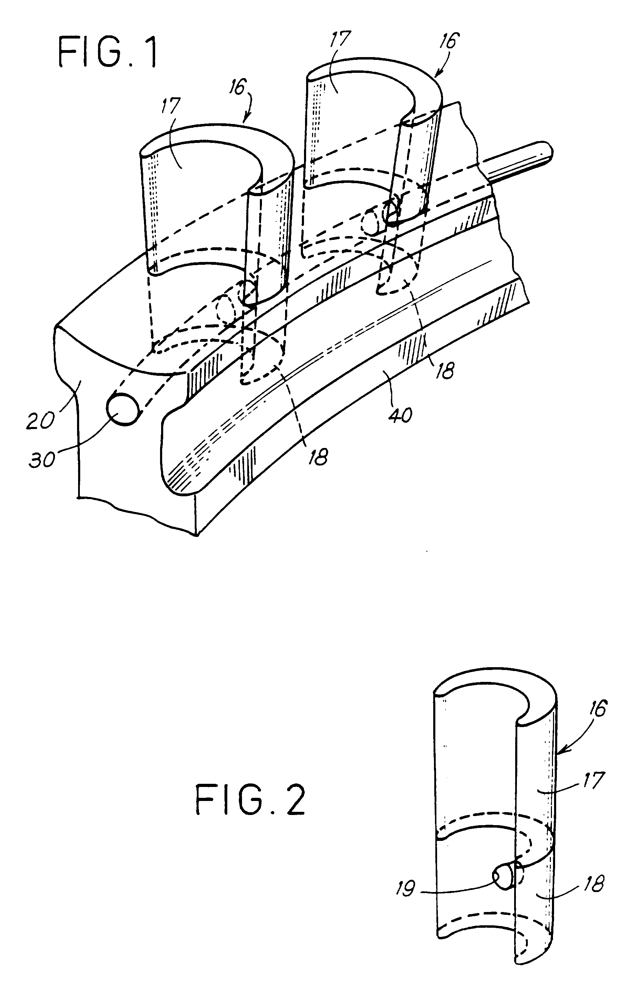

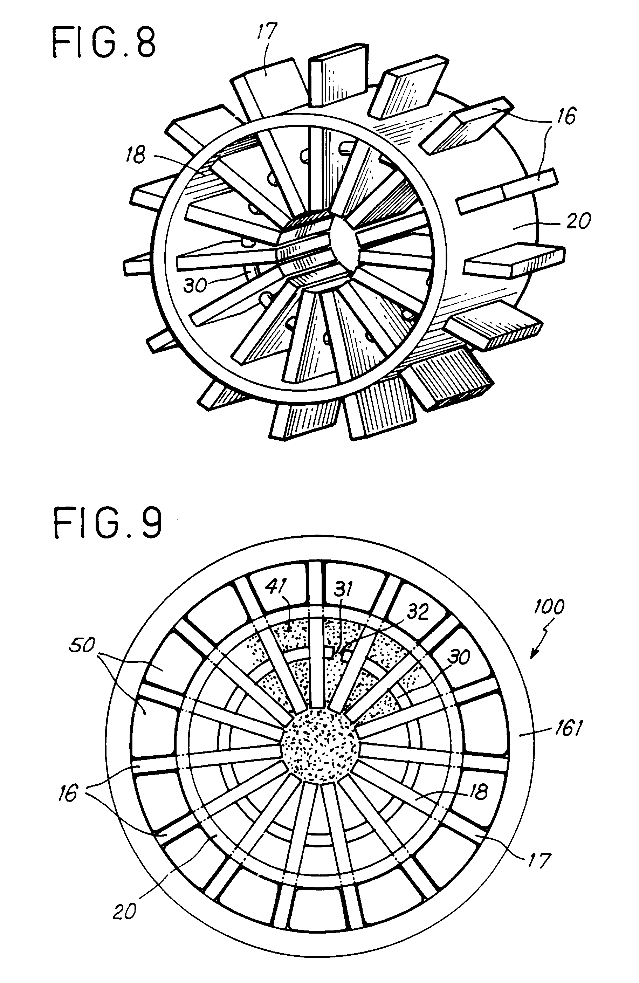

Sur les figures 1 et 2 on a représenté des aubes 16 présentant des sections en forme de croissant. Sur les figure 8,9,12 et 13 on a au contraire représenté des aubes 16 à section rectangulaire présentant ainsi une forme parallélépipèdique très simple.

Diverses autres formes de section sont toutefois possibles en fonction des applications envisagées.

Si les aubes peuvent être mises en forme individuellement, il est également possible, grâce à leur forme cylindrique, de les réaliser simultanément en grand nombre à partir d'un barreau cylindrique unique qui présente le profil désiré et est ensuite simplement découpé en tronçons correspondant chacun à une aube. Cette technique de "saucissonnage" est rendue possible du fait que les pieds d'aube n'ont pas besoin d'être conformés en queue d'aronde ou en sapin comme dans les réalisations existantes, et le profil de l'aube peut être réalisé par un simple empilage de fibres.

Selon l'invention, il suffit de percer un trou 19 dans chaque pied d'aube 18, perpendiculairement à la direction longitudinale de l'aube 16, afin de permettre l'insertion d'un fil métallique rigide 30 (figure 1) qui permet à la fois le montage des différentes aubes 16 et leur retenue lors de la formation du moyeu 40 comme cela sera expliqué plus loin. Ce type de montage évite la réalisation de pieds d'aube 18 de forme compliquée tout en augmentant la résistance mécanique.

Parallèlement à la fabrication des aubes 16, on procède à la fabrication d'un anneau métallique ou composite plat 20 destiné à définir la jante de la roue de turbine de laquelle émergent les aubes 16 insérées dans le moyeu 40.

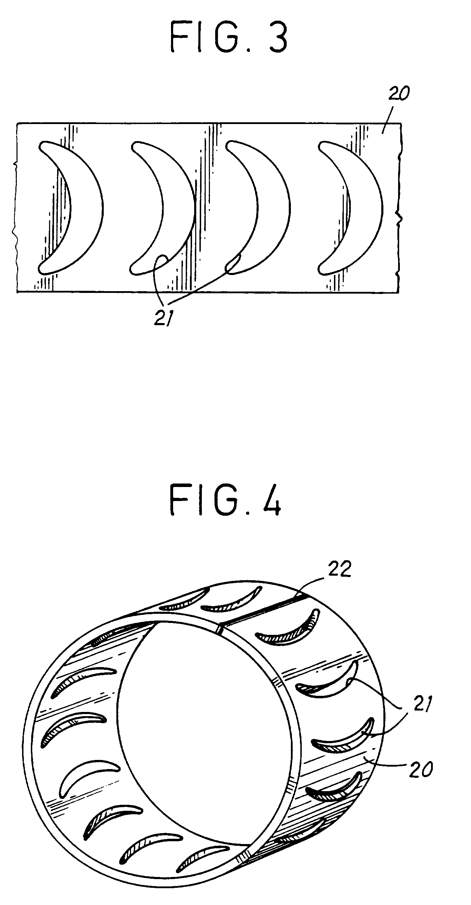

Pour cela, on peut partir d'un ruban métallique plat 20 dans lequel on découpe une série d'ouvertures 21 régulièrement espacées et présentant chacune le même profil que celui des aubes 16 (figure 3). La découpe peut être effectuée par divers procédés tels que par exemple poinçonnage, électroérosion, découpe au laser ou au jet d'eau, ou encore usinage traditionnel.

Des tronçons du ruban métallique plat muni d'ouvertures 21 sont ensuite mises en forme d'anneaux 20 et les deux extrémités du tronçon de ruban conformé en anneau sont rendues solidaire dans une zone 22 (figure 4) par exemple par soudage.

Selon une variante de réalisation, des tronçons de ruban métallique plat sont d'abord découpés et conformés en anneau fermé 20, puis des ouvertures 21 sont ensuite découpées dans l'anneau cylindrique fermé 20.

L'anneau cylindrique 20 peut encore être réalisé en matériau composite, une série d'ouvertures 21 régulièrement espacées étant réalisées dans l'anneau par exemple selon l'un des procédés indiqués ci-dessus.

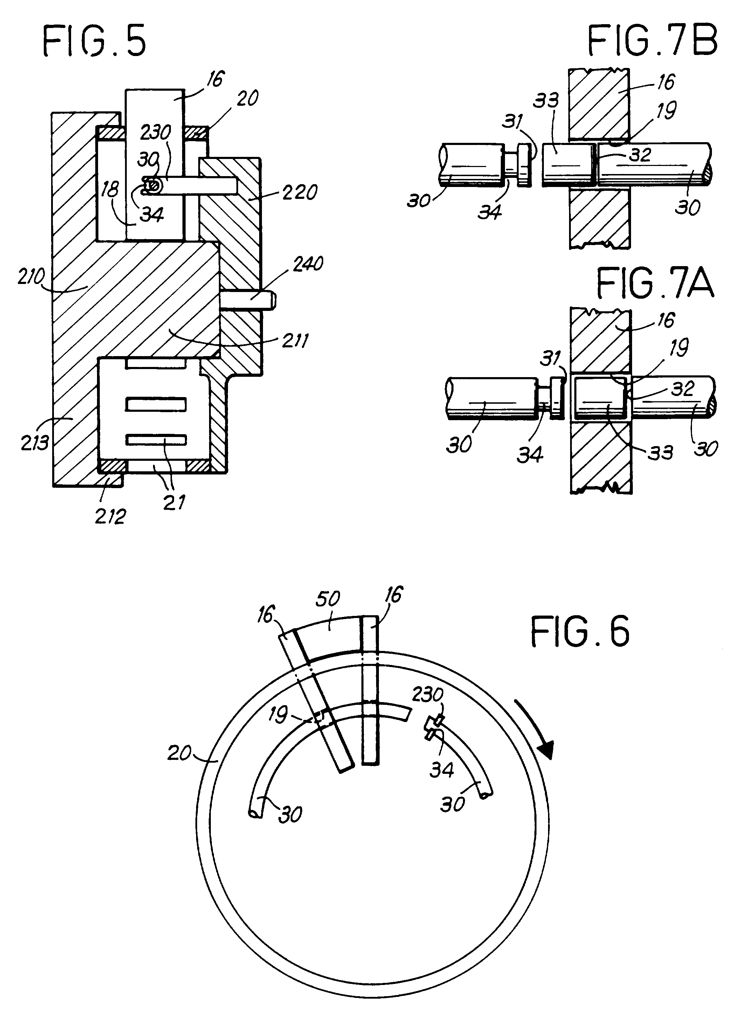

Après réalisation des aubes 16 et d'un anneau cylindrique fermé 20 muni d'ouvertures 21, l'anneau 20 est disposé dans un organe de montage 210 (figure 5) qui peut par exemple comprendre un noyau central cylindrique 211 et un anneau cylindrique extérieur 212 coaxial au noyau 211 et relié à celui-ci par une joue externe 213 en forme de disque. L'anneau cylindrique fermé 20 est introduit à l'intérieur de l'anneau cylindrique extérieur 212 qui assure son maintien en position. Les aubes 16 sont successivement introduites dans les ouvertures 21 de l'anneau cylindrique 20 et viennent se positionner contre le noyau central 211 qui sert de butée de centrage pour les pieds d'aube 18.

Au fur et à mesure de l'insertion d'une nouvelle aube 16 dans l'anneau cylindrique 20 formant jante, un fil métallique rigide annulaire ouvert 30, qui présente de préférence une section circulaire, est introduit dans les trous 19 des aubes 16.

Les pieds 18 des aubes 16 sont ainsi enfilés successivement dans le fil métallique annulaire 30, qui présente un diamètre inférieur à celui de l'anneau cylindrique 20 et se trouve destiné à être ensuite noyé dans le moyeu 40 de la roue de turbine. La partie interrompue du fil métallique 30 en forme de tole, ou à section carrée présente une dimension légèrement supérieure à l'épaisseur d'un pied d'aube 18, de manière à permettre l'engagement d'un pied d'aube 18 entre les deux extrémités libres 31,32 du fil rigide 30 (figure 6).

L'entraînement du fil 30 à travers les trous 19 ménagés dans les pieds d'aube 18 peut être effectué à l'aide d'un mécanisme 220 placé du côté opposé au support de montage 210, centré par un axe 240 sur le noyau central 211 et comprenant une pince 230 pouvant s'engager dans une gorge 34 formée au voisinage d'une première extrémité libre 31 du fil métallique 30.

Les figures 7A et 7B montrent un exemple de fin de processus d'enfilage du fil 30 dans le trou 19 de la dernière aube 16 à mettre en place. Un insert cylindrique 33, de même diamètre que le fil 30, est introduit dans le trou 19 de l'aube 16 et l'aube 16 est positionnée de telle façon que le trou 19 soit situé entre les extrémités libres 31 et 32 du fil 30 (figure 7A). Par rotation du fil 30, une extrémité libre 32 est introduite à mi-profondeur du trou 19 en décalant l'insert 33, assurant ainsi une retenue de l'aube 16 (figure 7B).

Selon une variante de réalisation, à la fin du processus d'enfilage des aubes 16 dans le fil 30, les deux extrémités libres 31, 32 du fil 30 sont situées entre deux aubes 16 et comportent une liaison par agrafage.

La figure 8 montre un exemple d'assemblage réalisé à la fin de l'étape d'insertion des aubes 16 dans l'anneau extérieur cylindrique 20 et d'enfilage des pieds d'aube 18 dans le fil rigide annulaire 30. Dans l'exemple de la figure 8, on a représenté quinze aubes radiales 16, de forme parallélépipédique et régulièrement réparties par rapport à l'anneau extérieur cylindrique 20 délimitant la jante de la roue de turbine. Le fil métallique interne 30 assure une retenue des pieds d'aube 18 destinés à être noyés dans le moyeu métallique. Le nombre d'aubes 16 peut naturellement être différent de quinze, en fonction des applications et des dimensions de la roue de turbine.

L'assemblage représenté sur la figure 8 constitue l'ossature de la roue de turbine, et doit ensuite être introduit dans un boîtier étanche pour permettre la réalisation d'un moyeu métallique par la métallurgie des poudres.

Plusieurs modes de réalisation sont possibles pour la réalisation du moyeu.

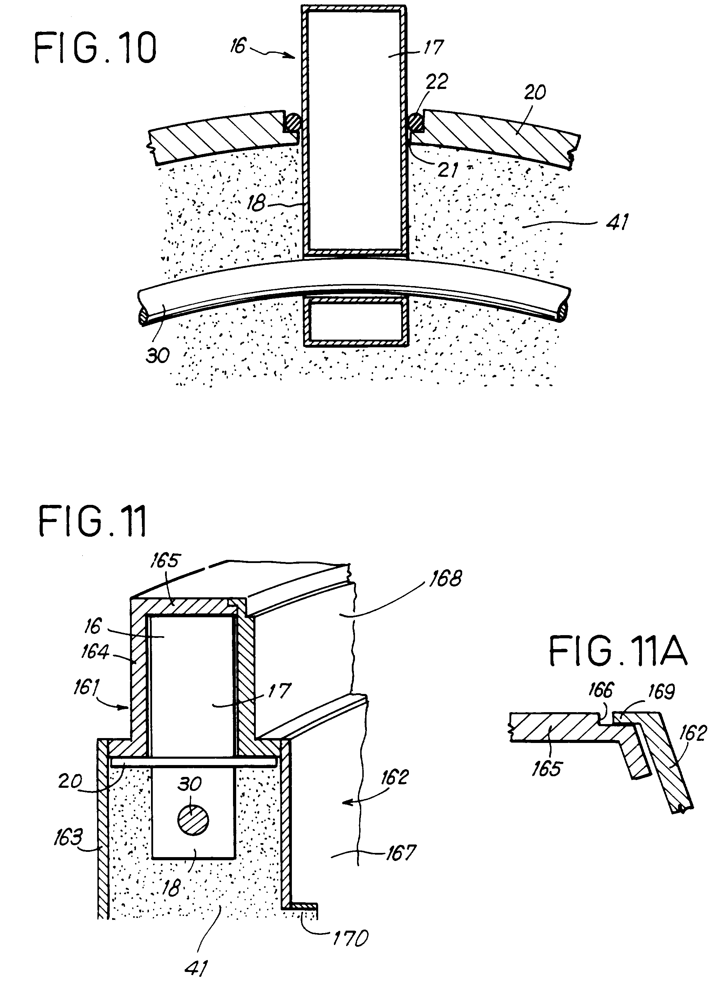

Selon un premier mode de réalisation possible, illustré sur les figures 10, 12 et 13, on réalise un brasage, à l'aide d'un fil de brasure 22, entre les aubes 16 et l'anneau extérieur 20 au niveau des ouvertures 21, afin d'assurer une étanchéité entre les aubes 16 et l'anneau 20. Les pieds d'aubes 18 ont eux-mêmes été préalablement imperméabilisés, ou ont reçu une couche jouant le rôle d'une barrière de diffusion, avant leur montage, comme indiqué plus haut. Les trous 19 recevant le fil métallique 30 ont également été imperméabilisés ou munis d'une douille avant le montage.

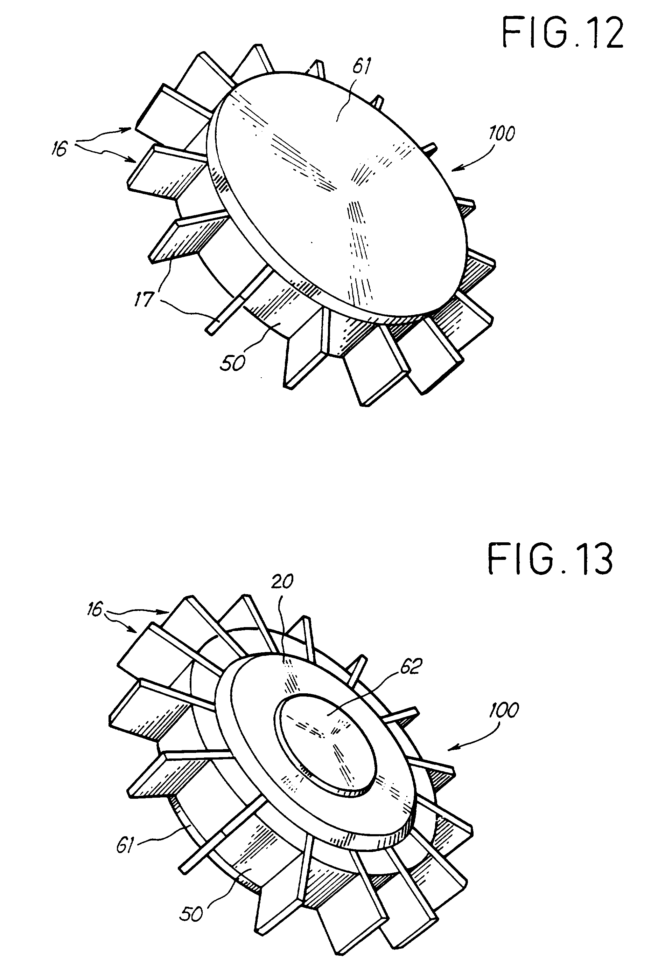

Lorsque les aubes 16 sont brasées sur l'anneau cylindrique extérieur métallique ou composite 20, celui-ci peut constituer la partie latérale du boîtier servant à la réalisation du moyeu par la métallurgie des poudres. Dans ce cas, les éléments de boîtier à rajouter à l'assemblage de la figure 8 pour constituer une enceinte étanche comprennent simplement des faces frontales métalliques avant 62 (figure 13) et arrière 61 (figure 12) qui obturent la partie centrale du moyeu délimitée par l'anneau extérieur 20. Comme cela est visible sur les figures 12 et 13, des inserts métalliques ou composites 50 formant entretoises peuvent être provisoirement disposés entre les têtes 18 des aubes 16 pour limiter les efforts auxquels peuvent être soumises les aubes 16 lors de l'opération de compaction isostatique à chaud. Dans ce cas, l'une des parties de boîtier, telle que la face arrière 61 peut s'étendre radialement au-delà de l'anneau extérieur 20 pour assurer un maintien des inserts 50 qui restent toutefois extérieurs au boîtier selon ce mode de réalisation.

Après introduction d'une poudre d'alliage métallique 41 à l'intérieur du boîtier étanche, on réalise une compaction isostatique à chaud par exemple à 1000°C et sous environ 1000 bar.

Les inserts 50 sont ensuite enlevés et le boîtier 61,62 est usiné de façon à donner au moyeu de la roue de turbine 100 sa forme définitive. Les aubes 16 ne nécessitent elles-même que de faibles retouches lors des opérations d'équilibrage de la roue de turbine.

On décrira maintenant en référence aux figures 9, 11, 11A, 14 et 15 un autre mode de réalisation possible pour la fabrication du moyeu par la métallurgie des poudres.

Selon ce mode particulier de réalisation, il n'est pas nécessaire d'assurer une liaison étanche entre l'anneau extérieur 20 et les aubes 16. En revanche, il convient de disposer des inserts 50, par exemple métalliques ou céramiques dans tous les intervalles libres entre les aubes 16, et ces inserts 50 doivent s'étendre sensiblement sur toute la hauteur des têtes d'aube 17 qui émergent au-delà de l'anneau extérieur 20 (figure 9) afin d'éviter l'écrasement des aubes sous l'action des hautes pressions. Les inserts 50 peuvent être enduits par exemple de nitrure de bore afin d'éviter qu'ils adhèrent aux aubes 16 en matériau composite ou à l'anneau extérieur 20 et puissent plus facilement être enleves après l'opération de compaction isostatique à chaud.

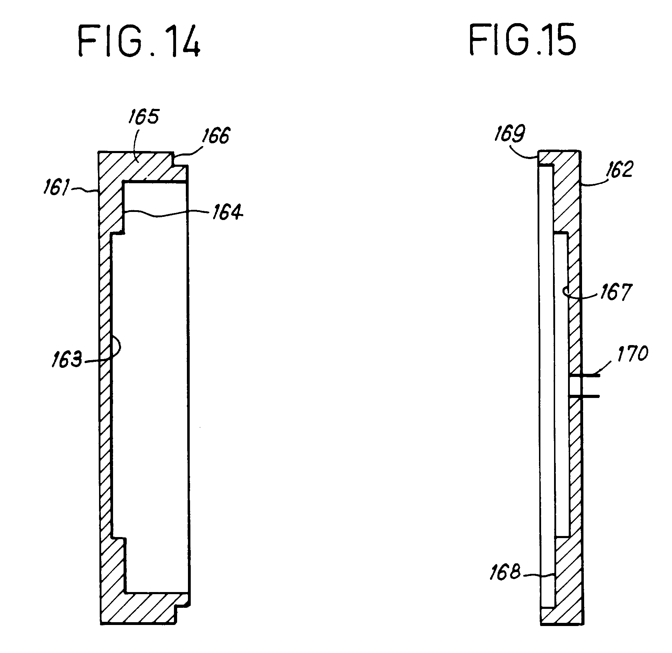

Selon ce mode de réalisation, l'ensemble de l'assemblage tel que celui de la figure 8, auquel ont été ajoutés des inserts 50, comme représenté sur la figure 9, est incorporé dans un boîtier étanche 161,162. Aucune étanchéité particulière n'est à réaliser au niveau des aubes individuelles 16, ce qui contribue à simplifier la réalisation. Le boîtier 161, 162 peut être formé à partir d'un fond 161 (figure 14) et d'un couvercle 162 (figure 15).

Le fond 161 et le couvercle 162 définissent les faces frontales du boîtier avec des parties centrales 163,167 qui délimitent un volume correspondant au moyeu proprement dit, c'est-à-dire à l'espace interne à l'anneau extérieur 20. Les parties périphériques 165, 168 du fond 161 et du couvercle 162 délimitent un espace plus étroit qui correspond à la largeur des têtes 18 des aubes 16.

Sur les figures 11 et 15, la référence 170 désigne le canal d'introduction de la poudre d'alliage métallique 41 dans le boîtier.

Les deux parties 161,162 du boîtier sont réunies de façon étanche par soudage, par exemple au niveau d'une gorge périphérique 166 formée dans le fond 161 et dans laquelle vient s'engager un rebord 169 du couvercle 162 (figure 11A).

Après l'opération de densification à chaud de la poudre d'alliage métallique 41 à l'intérieur du boîtier 161, 162 pour former le moyeu métallique, le boîtier 161,162 est enlevé par usinage, les inserts 50 sont retirés des espaces libres entre les têtes d'aube 18 et un usinage final de la roue de turbine est effectué pour réaliser un équilibrage.

Le fil métallique torique 30 est noyé dans le moyeu métallique à la fin de l'opération de compaction isostatique à chaud et contribue non seulement à maintenir les aubes en position pendant la phase de compaction isostatique à chaud mais également à conférer une plus grande résistance à l'arrachement des aubes sous l'action de la force centrifuge. Le fil métallique 30 est avantageusement réalisé dans le même matériau que celui de la compaction isostatique à chaud afin d'accroître l'homogénéité du moyeu, mais ceci n'est toutefois pas absolument obligatoire.

Le procédé selon l'invention permet de réaliser de façon simple une roue de turbine ou de compresseur monobloc 100 de composition hétérogène, dans laquelle les aubes 16 en matériau composite ou céramique insérées dans le moyeu métallique 40 peuvent présenter des formes très simples et être ancrées de façon plus efficace dans le moyeu métallique 40. Dans le produit fini, les corps des aubes 16 constitués par les têtes d'aube 17 émergeant du moyeu 40 et par les pieds d'aube 18 noyés dans le moyeu métallique présentent chacun une forme essentiellement cylindrique droite avec une section définissant un profil prédéterminé non circulaire. Chaque trou 19 formé dans un pied d'aube 18 essentiellement perpendiculairement à l'axe de l'aube 16 reste traversé par le fil métallique 30 noyé dans le moyeu 40,

## Revendications

1. Procédé de fabrication d'une roue de turbine à aubes en matériau composite ou céramique insérées dans un moyeu métallique, caractérisé en ce qu'il comprend les étapes suivantes :
a) on fabrique des aubes (16) en matériau composite ou céramique présentant chacune une forme essentiellement cylindrique droite avec une section définissant un profil prédéterminé non circulaire et on forme un trou (19) essentiellement perpendiculaire à l'axe de l'aube dans le pied (18) de celle-ci,
b) on forme un anneau cylindrique fermé (20) de hauteur prédéterminée correspondant à la largeur du moyeu de la roue et comportant des orifices (21) correspondant audit profil prédéterminé des aubes (16),
c) on insère les pieds (18) des aubes dans lesdits orifices (21) de l'anneau cylindrique (20) formant jante,
d) on enfile successivement les pieds (18) des différentes aubes (16) insérées dans l'anneau cylindrique (20) dans un fil métallique rigide annulaire ouvert (30) dont le diamètre est inférieur à celui de l'anneau cylindrique (20) et qui traverse lesdits trous (19) formés dans les pieds (18) des aubes (16),
e) on dispose l'assemblage constitué des aubes (16), de l'anneau cylindrique (20) et du fil métallique rigide annulaire (30) dans un boîtier étanche (61,62;161,162) après avoir interposé des entretoises ou inserts (50) amovibles entre les têtes (7) des aubes (16) émergeant radialement vers l'extérieur au-delà dudit anneau cylindrique (20),
f) on réalise une compaction isostatique à chaud pour compacter une poudre d'alliage métallique (41) introduite dans le boîtier étanche (61,62;161,162) pour réaliser le moyeu de la roue de turbine (100) en noyant les pieds d'aube (18) et le fil métallique rigide annulaire (30) selon la technique de la métallurgie des poudres, et
g) on usine la partie extérieure du boîtier étanche (61,62;161,162) délimitant le moyeu de la roue de turbine (100) et on retire lesdites entretoises amovibles (50).

2. Procédé selon la revendication 1, caractérisé en ce que l'on fabrique en une seule opération une grande longueur de matériau composite ou céramique cylindrique présentant une section de profil uniforme prédéterminé, puis on tronçonne en aubes individuelles (16) ladite grande longueur de matériau composite ou céramique.

3. Procédé selon la revendication 1 ou la revendication 2, caractérisé en ce que ledit anneau cylindrique (20) est formé en matériau métallique.

4. Procédé selon la revendication 1 ou la revendication 2, caractérisé en ce que ledit anneau cylindrique (20) est formé en matériau composite.

5. Procédé selon l'une quelconque des revendications 1 à 4, caractérisé en ce que lesdits orifices (21) correspondant audit profil prédéterminé des aubes (16) sont formés par découpe dans un anneau cylindrique (20) déjà pré-formé.

6. Procédé selon la revendication 3, caractérisé en ce que pour former l'anneau cylindrique fermé (20), on découpe d'abord dans un ruban métallique plat de largeur prédéterminée correspondant à la largeur du moyeu de la roue, des orifices (21) correspondant audit profil prédéterminé des aubes (16) et on conforme ensuite le ruban métallique muni des orifices (21) en un anneau cylindrique fermé (20).

7. Procédé selon l'une quelconque des revendications 1 à 6, caractérisé en ce que, après réalisation de l'assemblage constitué des aubes (16), de l'anneau cylindrique (20) et du fil métallique rigide annulaire (30), on réalise une opération de brasage entre les pieds d'aube (18) et l'anneau cylindrique (20), et on raccorde le boîtier étanche (61,62) sur l'anneau cylindrique (20), seuls les pieds d'aube (18) et le fil métallique rigide (30) étant disposés à l'intérieur du boîtier étanche (61,62) dans lequel est effectuée l'opération de compaction isostatique à chaud.

8. Procédé selon la revendication 7, caractérisé en ce que les pieds d'aube (18) sont recouverts d'une couche d'un matériau d'imperméabilisation ou de barrière de diffusion avant l'opération de brasage.

9. Procédé selon l'une quelconque des revendications 1 à 6, caractérisé en ce que l'on réalise la compaction isostatique à chaud dans un boîtier étanche (161,162) qui entoure l'ensemble de l'assemblage constitué des aubes (16) de l'anneau cylindrique (20), du fil métallique rigide (30) et des entretoises (50).

10. Procédé selon l'une quelconque des revendications 1 à 9, caractérisé en ce que l'on réalise la compaction isostatique à chaud à une température de l'ordre de 1000°C et sous une pression de l'ordre de 1000 bar.

11. Procédé selon l'une quelconque des revendications 1 à 10, caractérisé en ce que l'on fabrique les aubes (16) à partir de matériaux composites de type carbone-carbone ou carbone-carbure de silicium.

12. Procédé selon l'une quelconque des revendications 1 à 11, caractérisé en ce que la poudre d'alliage métallique (41) utilisée pour la compaction isostatique à chaud est de même nature que le matériau du fil métallique rigide annulaire (30).

13. Procédé selon l'une quelconque des revendication 1 à 12, caractérisé en ce que l'ouverture du fil métallique rigide annulaire (30) est légèrement supérieure à la profondeur d'un trou (19) formé dans un pied d'aube (18).

14. Procédé selon la revendication 13, caractérisé en ce que en position finale, l'une des extrémités (31,32) du fil métallique rigide annulaire (30) est située sensiblement à mi-profondeur du trou (19) formé dans un pied d'aube (18).

15. Procédé selon la revendication 13, caractérisé en ce qu'en position finale, les deux extrémités du fil métallique rigide annulaire (30) sont situées entre deux aubes (16).

16. Procédé selon l'une quelconque des revendications 1 à 15, caractérisé en ce que l'on réalise une compaction isostatique à chaud avec une poudre d'alliage métallique (41) à base de nickel, de titane ou de fer.

17. Procédé selon l'une quelconque des revendications 1 à 16, caractérisé en ce que l'on forme un boîtier étanche (61,62;161,162) à partir d'une première pièce métallique (61;161) formant fond et d'une deuxième pièce métallique (62;162) formant couvercle soudées ensemble et en ce que l'on réalise la compaction isostatique à chaud à travers l'une desdites première et deuxième pièces métalliques (61;161;62;162).

18. Procédé selon l'une quelconque des revendications 1 à 17, caractérisé en ce que l'on dépose sur chaque tête d'aube (17) sur la partie émergente par rapport à l'anneau cylindrique (20), une couche spécifique de protection contre l'oxydation et les attaques des milieux agressifs.

19. Roue de turbine monobloc de composition hétérogène à aubes (16) en matériau composite ou céramique insérées dans un moyeu métallique (40), caractérisée en ce que les aubes (16) présentent chacune une forme essentiellement cylindrique droite avec une section définissant un profil prédéterminé non circulaire et comportent chacune un pied d'aube (18) noyé dans le moyeu métallique (40) et muni d'un trou (19) essentiellement perpendiculaire à l'axe de l'aube (16) les trous (19) des différents pieds d'aube (18) étant tous traversés par un élément métallique (30) noyé dans le moyeu (40).

20. Roue de turbine selon la revendication 19, appliquée dans le domaine de l'aéronautique ou de l'espace.

## Patentansprüche

1. Verfahren zur Herstellung eines Turbinenrades mit Schaufeln aus Verbund- oder Keramikmaterial, die in eine Metallnabe eingesetzt sind,
dadurch gekennzeichnet, daß es aus den folgenden Verfahrensschritten besteht:
a) es werden Schaufeln (16) aus Verbund- oder Keramikmaterial hergestellt, die jeweils eine im wesentlichen gerade, zylindrische Form mit einem Querschnitt haben, der ein nicht kreisförmiges, vorbestimmtes Profil aufweist, und es wird eine Bohrung (19) ausgeführt, die im wesentlichen senkrecht zu der Schaufelachse in deren Fuß (18) verläuft,
b) es wird ein geschlossener, zylinderförmiger Ring (20) mit vorbestimmter Höhe gebildet, der der Breite der Radnabe entspricht und Öffnungen (21) aufweist, die dem genannten vorbestimmten Profil der Schaufeln (16) entsprechen,
c) die Schaufelfüße (18) werden in die genannten Öffnungen (21) des zylinderförmigen Rings (20), der den Nabenkranz bildet, eingesetzt,
d) die Füße (18) der einzelnen Schaufeln (16) werden in dem zylinderförmigen Ring (20) nacheinander auf einen offenen, ringförmigen, starren Metalldraht (30) aufgefädelt, dessen Durchmesser kleiner ist als der des zylinderförmigen Rings (20), und der durch die in den Füßen (18) der Schaufeln (16) gebildeten Bohrungen (19) verläuft,
e) die Gesamtanordnung, die aus den Schaufeln (16), dem zylinderförmigen Ring (20) und dem ringförmigen, starren Metalldraht (30) besteht, wird in einem dichten Gehäuse (61, 62; 161, 162) angeordnet, nachdem herausnehmbare Streben oder Einsätze (50) zwischen die Köpfe (7) der Schaufeln (16) eingefügt wurden, die in radialer Richtung nach außen über den genannten zylinderförmigen Ring (20) wieder austreten,
f) es wird eine isostatische Warmverdichtung durchgeführt, um ein Metallegierungspulver (41) zu verdichten, das in das dichte Gehäuse (61, 62; 161, 162) eingeführt wird, um die Nabe des Turbinenrades (100) herzustellen, indem die Schaufelfüße (18) und der ringförmige, starre Metalldraht (30) nach der Pulvermetallurgietechnik versenkt werden, und
g) der äußere Teil des dichten Gehäuses (61, 62; 161, 162), der die Nabe des Turbinenrades (100) umgrenzt, wird gefertigt und die genannten abnehmbaren Streben (50) werden entfernt.

2. Verfahren nach Anspruch 1,
dadurch gekennzeichnet, daß in einem einzigen Vorgang eine große Länge an zylinderförmigem Verbund- oder Keramikmaterial gefertigt wird, die einen Querschnitt mit vorbestimmtem, gleichmäßigem Profil aufweist, und dann die genannte große Länge an zylinderförmigem Verbund- oder Keramikmaterial in einzelne Schaufeln (16) zertrennt wird.

3. Verfahren nach Anspruch 1 oder Anspruch 2,
dadurch gekennzeichnet, daß der genannte zylinderförmige Ring (20) aus metallischem Material gebildet wird.

4. Verfahren nach Anspruch 1 oder Anspruch 2,
dadurch gekennzeichnet, daß der genannte zylinderförmige Ring (20) aus Verbundmaterial gebildet wird.

5. Verfahren nach einem der Ansprüche 1 bis 4,
dadurch gekennzeichnet, daß die genannten Öffnungen (21), die dem genannten vorbestimmten Profil der Schaufeln (16) entsprechen, durch Ausschneiden aus einem bereits vorgeformten zylinderförmigen Ring (20) gebildet werden.

6. Verfahren nach Anspruch 3,
dadurch gekennzeichnet, daß zur Bildung des geschlossenen zylinderförmigen Rings (20) zunächst aus einem flachen Metallband mit vorbestimmter Breite, die der Breite der Radnabe entspricht, Öffnungen (21) ausgeschnitten werden, die dem genannten vorbestimmten Profil der Schaufeln (16) entsprechen, und dann wird das mit den Öffnungen (21) versehene Metallband in einen geschlossenen zylinderförmigen Ring (20) umgeformt.

7. Verfahren nach einem der Ansprüche 1 bis 6,
dadurch gekennzeichnet, daß nach Herstellung der Gesamtanordnung, die aus den Schaufeln (16), dem zylinderförmigen Ring (20) und dem ringförmigen, starren Metalldraht (30) besteht, ein Vorgang des Lötens zwischen den Schaufelfüßen (18) und dem zylinderförmigen Ring (20) erfolgt und das dichte Gehäuse (61, 62) auf den zylinderförmigen Ring (20) gesetzt wird, wobei sich nur die Schaufelfüße (18) und der starre Metalldraht (30) im Inneren des dichten Gehäuses (61, 62) befinden, in dem der Vorgang der isostatischen Warmverdichtung durchgeführt wird.

8. Verfahren nach Anspruch 7,
dadurch gekennzeichnet, daß die Schaufelfüße (18) vor dem Lötvorgang mit einer Schicht aus einem Abdichtungsmaterial oder Diffusionssperrmaterial belegt werden.

9. Verfahren nach einem der Ansprüche 1 bis 6,
dadurch gekennzeichnet, daß die isostatische Warmverdichtung in einem dichten Gehäuse (161, 162) durchgeführt wird, das die Gesamtanordnung, die aus den Schaufeln (16), dem zylinderförmigen Ring (20), dem ringförmigen, starren Metalldraht (30) und den Streben (50) besteht, umschließt.

10. Verfahren nach einem der Ansprüche 1 bis 9,
dadurch gekennzeichnet, daß die isostatische Warmverdichtung bei einer Temperatur der Größenordnung von 1000 °C und unter einem Druck der Größenordnung von 1000 Bar durchgeführt wird.

11. Verfahren nach einem der Ansprüche 1 bis 10,
dadurch gekennzeichnet, daß die Schaufeln (16) aus Verbundstoffen des Typs Kohlenstoff-Kohlenstoff oder Kohlenstoff-Silizizumkohlenstoff hergestellt werden.

12. Verfahren nach einem der Ansprüche 1 bis 11,
dadurch gekennzeichnet, daß das für die isostatische Warmverdichtung verwendete Metallegierungspulver (41) von gleicher Art ist wie das Material des ringförmigen, starren Metalldrahts (30).

13. Verfahren nach einem der Ansprüche 1 bis 12,
dadurch gekennzeichnet, daß die Öffnung des ringförmigen, starren Metalldrahts (30) etwas größer ist als die Tiefe einer in einem Schaufelfuß (18) gebildeten Bohrung (19).

14. Verfahren nach Anspruch 13,
dadurch gekennzeichnet, daß in Endposition eines der Enden (31, 32) des ringförmigen, starren Metalldrahts (30) im wesentlichen in halber Tiefe der in einem Schaufelfuß (18) gebildeten Bohrung (19) sitzt.

15. Verfahren nach Anspruch 13,
dadurch gekennzeichnet, daß in Endposition die beiden Enden des ringförmigen, starren Metalldrahts (30) sich zwischen zwei Schaufeln (16) befinden.

16. Verfahren nach einem der Ansprüche 1 bis 15,
dadurch gekennzeichnet, daß eine isostatische Warmverdichtung mit einem Metallegierungspulver (41) auf Nickel-, Titan- oder Eisenbasis erfolgt.

17. Verfahren nach einem der Ansprüche 1 bis 16,
dadurch gekennzeichnet, daß ein dichtes Gehäuse (61, 62; 161, 162) aus einem ersten, den Boden bildenden Metallteil (61; 161), und einem zweiten, den Deckel bildenden Metallteil (62; 162), die zusammengeschweißt werden, gebildet wird, und daß die isostatische Warmverdichtung durch eines der genannten ersten und zweiten Metallteile (61, 161; 62, 162) erfolgt.

18. Verfahren nach einem der Ansprüche 1 bis 17,
dadurch gekennzeichnet, daß auf jedem Schaufelkopf (17) auf den gegenüber dem zylinderförmigen Ring (20) hervorstehenden Teil eine spezielle Schutzschicht gegen Oxidieren und Einfressen aggressiver Stoffe aufgetragen wird.

19. Einstückiges Turbinenrad heterogener Zusammensetzung mit Schaufeln (16) aus Verbund- oder Keramikmaterial, die in eine Metallnabe (40) eingesetzt sind, dadurch gekennzeichnet, daß die Schaufeln (16) jeweils eine im wesentlichen gerade, zylindrische Form mit einem Querschnitt haben, der ein nicht kreisförmiges, vorbestimmtes Profil aufweist, und jeweils einen in der Metallnabe (40) versenkten Schaufelfuß (18) aufweisen, der mit einer Bohrung (19) versehen ist, die im wesentlichen senkrecht zu der Achse der Schaufel (16) verläuft, wobei durch alle Bohrungen (19) der einzelnen Schaufelfüße (18) ein Metallelement (30) verläuft, das in der Nabe (40) versenkt ist.

20. Turbinenrad nach Anspruch 19 zur Verwendung auf dem Gebiet der Luftfahrt oder Raumfahrt.

## Claims

1. A method of manufacturing a turbine wheel having blades made of a ceramic or composite material and inserted into a metal hub, characterized in that it comprises the following steps:
(a) the blades (16) are manufactured from a ceramic or composite material, each blade having an essentially right cylindrical shape with a cross-section defining a predetermined non-circular shape, and a hole (19) is formed in the base (18) of each blade, the hole being essentially perpendicular to the axis of the blade;
(b) a closed cylindrical ring (20) is formed of predetermined height that corresponds to the width of the hub of the wheel, the ring being provided with orifices (21) corresponding to the predetermined cross-sectional shape of the blades (16);
(c) the bases (18) of the blades are inserted through said orifices (21) in the rim-forming cylindrical ring (20);
(d) the bases (18) of the various blades (16) inserted through the cylindrical ring (20) are successively threaded onto an open annular rigid metal wire (30) which has a smaller diameter than the cylindrical ring (20) and which passes through said holes (19) formed in the bases (18) of the blades (16);
(e) the assembly constituted by the blades (16), by the cylindrical ring (20) and by the annular rigid metal wire (30) is disposed inside a sealed housing (61,62; 161,162) after removable spacers or inserts (50) have been interposed between the heads (7) of the blades (16) projecting radially outwards beyond said cylindrical ring (20);
(f) hot isostatic compaction is perfomed so as to compact a metal alloy in powder form (41) that is inserted into the sealed housing (61, 62; 161, 162) so as to make the hub of the turbine wheel (100) while embedding the blade bases (18) and the annular rigid metal wire (30) by using the powder metallurgy technique; and
(g) the outside portion of the sealed housing (61,62;161,162) delimiting the hub of the turbine wheel (100) is machined and said removable spacers (50) are removed.

2. A method according to claim 1, characterized in that a long cylindrical length of ceramic or composite material is manufactured in a single operation, said length having a cross-section of predetermined uniform shape, and then said long length of ceramic or composite material is cut up into individual blades (16).

3. A method according to claim 1 or 2, characterized in that said cylindrical ring (20) is formed of metal.

4. A method according to claim 1 or 2, characterized in that said cylindrical ring (20) is formed of a composite material.

5. A method according to any one of claims 1 to 4, characterized in that said orifices (21), which correspond to the predetermined cross-sectional shape of the blades (16), are cut in a pre-formed cylindrical ring (20).

6. A method according to claim 3, characterized in that, to form the closed cylindrical ring (20), orifices (21) that correspond to said predetermined cross-sectional shape of the blades (16) are initially cut in a flat metal strip of predetermined width corresponding to the width of the hub of the wheel, and the metal strip provided with the orifices (21) is then shaped into a closed cylindrical ring (20).

7. A method according to any one of claims 1 to 6, characterized in that, after making the assembly constituted by the blades (16), by the cylindrical ring (20), and by the annular rigid metal wire (30), the blade bases (18) are soldered to the cylindrical ring (20), and the sealed housing (61, 62) is connected to the cylindrical ring (20), with only the blade bases (18) and the rigid metal wire (30) being disposed inside the sealed housing (61, 62) in which the hot isostatic compaction operation is performed.

8. A method according to claim 7, characterized in that each of the blade bases (18) is covered with a layer of sealant or with a diffusion barrier layer before the soldering operation is performed.

9. A method according to any one of claims 1 to 6, characterized in that the hot isostatic compaction is performed in a sealed housing (161,162) which surrounds the entire assembly constituted by the blades (16), by the cylindrical ring (20), by the rigid metal wire (30) and by the spacers (50).

10. A method according to any one of claims 1 to 9, characterized in that the hot isostatic compaction is performed at a temperature of about 1,000°C and under a pressure of about 1,000 bars.

11. A method according to any one of claims 1 to 10, characterized in that the blades (16) are made of composite materials of the carbon-carbon type or of the carbon-silicon carbide type.

12. A method according to any one of claims 1 to 11, characterized in that the metal alloy in powder form (41) used for the hot isostatic compaction is of the same type as the material of the annular rigid metal wire (30).

13. A method according to any one of claims 1 to 12, characterized in that the opening in the annular rigid metal wire (30) is slightly wider than the depth of a hole (19) formed in a blade base (18).

14. A method according to claim 13, characterized in that, in the final position, one of the ends (31, 32) of the annular rigid metal wire (30) is situated substantially half-way into the hole (19) formed in a blade base (18).

15. A method according to claim 13, characterized in that, in the final position, the two ends of the annular rigid metal wire (30) are situated between two blades (16).

16. A method according to any one of claims 1 to 15, characterized in that hot isostatic compaction is performed with a metal alloy in powder form (41) based on nickel, titanium or iron.

17. A method according to any one of claims 1 to 16, characterized in that a sealed housing (61, 62 ; 161, 162) is formed of a back-forming first metal part (61; 161) and of a cover-forming second metal part (62; 162), the two parts being welded together, and in that the hot isostatic compaction is performed via one of said first and second metal parts (61; 161; 62; 162).

18. A method according to any one of claims 1 to 17, characterized in that a specific protective layer is deposited on each blade head (17) over the portion that projects from the cylindrical ring (20), so as to provide the projecting portion of the blade head with protection against oxidation and attack from aggressive media

19. A one-piece turbine wheel of heterogenous composition, having blades (16) made of a ceramic or composite material and inserted into a metal hub (40), characterized in that each of the blades has an essentially right cylindrical shape with a cross-section defining a predetermined non-circular shape, and includes a blade base (18) embedded in the metal hub (40) and provided with a hole (19) that extends essentially perpendicular to the axis of the blade (16), a metal member (30) embedded in the hub (40) passing through the holes (19) in the various blade bases (18).

20. A turbine wheel according to claim 19, as used in the field of aeronautical or space engineering.
